# EUROPÄISCHE PATENTSCHRIFT

(11) **EP 1 004 629 B1**
(45) Veröffentlichungstag und Bekanntmachung des Hinweises auf die Patenterteilung: **13.06.2001**
(21) Anmeldenummer: 99120979.2
(22) Anmeldetag: 04.11.1999
(51) Int. Cl.: C08L 61/04, C09J 161/04

(54) **Verfahren zur Herstellung von schnellhärtenden, mit Phenolharz gebundenen Formkörpern**
Process for the preparation of rapidly hardening with phenolic resin bonded shaped bodies
Procédé de production de corps moulés liés avec une résine phénolique à durcissement rapide

(30) Priorität: 24.11.1998 DE 19854207
(43) Veröffentlichungstag der Anmeldung: 31.05.2000
(73) Patentinhaber: Wacker-Chemie GmbH, 81737 München (DE)
(72) Erfinder: Kohlhammer, Klaus, Dr., 84533 Marktl (DE); Schmidt, Claudia, 84503 Altötting (DE)
(74) Vertreter: Schuderer, Michael, Dr.

(56) Entgegenhaltungen:
- CH-A- 497 245
- DE-A- 19 545 608
- US-A- 4 044 197
- US-A- 4 612 224

## Beschreibung

Die Erfindung betrifft ein Verfahren zur Herstellung von schnellhärtenden, mit Phenolharz gebundenen Formkörpern, wobei pulverförmige Additionspolymerisate aus der Gruppe umfassend Polyvinylalkohole und mit Hydroxygruppen enthaltenden Schutzkolloiden stabilisierte Additionspolymerisate zusammen mit pulverförmigen Phenolharzen eingesetzt werden.

Die Bedeutung von duroplastischen Phenol-Formaldehydharzen, wie beispielsweise den sogenannten Hexa-Novolaken oder Resolen, als Bindemittel für die verschiedensten Anwendungen hat in den letzten Jahren stark zugenommen. Typische Einsatzgebiete sind beispielsweise Bindemittel in Filterpapieren, Gießereiformsand, Keramiken, Fasermatten und Holzfaserplatten. Die Anwendung der Phenol-Formaldehydharze als duroplastisches Bindemittel verlangt in den meisten Fällen eine thermisch initiierte, intensive Vernetzung der Polymerketten zu einem dreidimensionalen, molekularen Netzwerk.

Im Interesse einer industriellen Anwendung, bei der es auf schnelle Taktzeiten ankommt, haben sich die Entwicklungsarbeiten insbesondere auf die Beschleunigung der Vernetzungsreaktion, der sogenannten Härtung, dieser Polymersysteme konzentriert.

Viele Arbeiten beschäftigten sich dabei mit Katalysatorsystemen, die die Kondensation von Phenol- mit Aldehydfunktionen beschleunigen, wobei insbesondere eine chemische Reaktion in ortho-Position des Phenolringes angestrebt wird. Beispiele hierfür sind bekannt aus der WO-A 93/08223, in der lösemittelfreie, feste Schmelzklebersysteme mit divalenten Metallsalzen als Katalysatoren beschreiben sind. Nachteilig hierbei ist der Überschuß an freiem Formaldehyd in der Größenordnung von bis zu 1.7 Mol%, der zu Umweltproblemen führen kann.

In der US-A 4112188 wird ein Verfahren zur Härtungsbeschleunigung von Resolen mittels Bor-haltiger Verbindungen beschrieben. Allerdings beruht dieses Verfahren nicht auf festen, sondern auf flüssigen Systemen in wäßriger Lösung.

Die Härtungsreaktion von Bindemittelgemischen auf Phenolharzbasis können auch durch Esterverbindungen beschleunigt werden. Beispielsweise ist aus der DE-A 4331656 (Derwent-Abstract AN 94-286789) bekannt, daß Triacetin als Härtungsbeschleuniger dienen kann. Allerdings funktioniert dieses System nur in wäßriger Lösung und in Gegenwart von Lignin. Auch in der australischen Patentschrift AU-B-22974/88 werden Esterverbindungen, insbesondere Lactone, organische Carbonate und Carbonsäureester, als Härtungsbeschleuniger für flüssige Phenolharze, den sogenannten Resolen beschrieben.

Polymere Härtungsbeschleuniger sind ebenfalls bekannt: Die US-A 5223587 beansprucht ein Bindemittel für Holzfasern, das aus einer Pulvermischung aus hochkondensierten Phenolharzen, nicht ausgehärteten Phenolharzen (Hexa-Novolake) und gegebenenfalls Kokosschalenmehl besteht. Aus der US-A 4426484 ist bekannt die Aushärtung von festen Resolen durch Zugabe von festen Novolak-Harzen, welche Resorcinol enthalten, zu beschleunigen. Nachteilig bei diesen beiden Verfahren ist die erhöhte Freisetzung von Formaldehyd und Phenol aus den eingesetzten Edukten. Dagegen bietet der Einsatz von pulverisiertem grünen Tee, wie aus US-A 4109057 bekannt, eine umweltschonende Alternative zur Härtungsbeschleunigung von Phenolharzen mittels polymerer Verbindungen, allerdings stellt hierbei der hohe Preis ein entscheidendes Hindernis für einen industriellen Einsatz dar.

Es bestand deshalb die Aufgabe, ein Verfahren zur Verfügung zu stellen mit dem die Aushärtung von festen Phenolharze, insbesondere von den sogenannten Hexa-Novolaken, beschleunigt wird.

Überraschenderweise wurde gefunden, daß Polyvinylalkohole und mit Hydroxygruppen enthaltenden Schutzkolloiden stabilisierte Additionspolymerisate die Aushärtung von Phenolharzen beschleunigen.

Gegenstand der Erfindung ist ein Verfahren zur Herstellung von schnellhärtenden, mit Phenolharz gebundenen Formkörpern, dadurch gekennzeichnet, daß pulverförmige Phenolharze zusammen mit pulverförmigen Additionspolymerisaten aus der Gruppe umfassend Polyvinylalkohole und mit Hydroxygruppen enthaltenden Schutzkolloiden stabilisierte Additionspolymerisate von einem oder mehreren Monomeren aus der Gruppe der Vinylester von unverzweigten oder verzweigten Carbonsäuren mit 1 bis 12 C-Atomen, der Ester der Acrylsäure und Methacrylsäure mit unverzweigten oder verzweigten Alkoholen mit 1 bis 12 C-Atomen, Vinylaromaten, Vinylhalogenide, Olefine, Diene, mit dem zu verklebenden Substrat vermischt werden oder auf das zu verklebende Substrat aufgetragen werden und anschließend unter Anwendung erhöhter Temperatur und gegebenenfalls von erhöhtem Druck, zu einem Formteil verarbeitet werden.

Geeignete Polyvinylalkohole sind teilverseifte oder vollverseifte Polyvinylalkohole, vorzugsweise mit einem Hydrolysegrad von 85 bis 100 Mol-% und einer Höppler-Viskosität von 1 bis 60 mPas, gemessen in 4 %-iger wäßriger Lösung (Methode nach Höppler bei 20°C, DIN 53015). Es können auch Vinylalkohol-Copolymerisate verwendet werden, welche neben den Vinylalkohol- und Vinylacetat-Einheiten noch andere Monomereinheiten, bespielsweise 1-Methylvinylacetat- oder 1-Methylvinylalkohol-Einheiten, vorzugsweise in einer Menge von 0.5 bis 10 Gew.-%, bezogen auf das Gesamtgewicht des Copolymerisats, enthalten. Die genannten Vinylalkohol-Homo- und -Copolymerisate sind im Handel erhältlich oder in dem Fachmann bekannter Weise, durch Hydrolyse oder Alkoholyse der entsprechenden Vinylacetat-Homo- und -Copolymerisate zugänglich.

Für die Schutzkolloid-stabilisierten Additionspolymerisate bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 9 bis 11 C-Atomen, beispielsweise VeoVa9^{R} oder VeoVa10^{R} (Handelsnamen der Firma Shell). Besonders bevorzugt ist Vinylacetat.

Für die Schutzkolloid-stabilisierten Additionspolymerisate bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat. Besonders bevorzugt sind Methylacrylat, Methylmethacrylat, n-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren. Gegebenenfalls können noch 0.05 bis 10.0 Gew.-%, bezogen auf das Gesamtgewicht der Monomeren, Hilfsmonomere enthalten sein, beispielsweise Acrylsäure, Acrylamid, Vinylsulfonsäure, 2-Acrylamido-propansulfonat, Vinyltriethoxysilan, gamma-Methacryloxypropyltriethoxysilan, N-Methylolacrylamid (NMA).

Bevorzugte Schutzkolloid-stabilisierte Additionspolymerisate sind Vinylester-Polymerisate, (Meth) acrylsäureester-Polymerisate, Vinylchlorid-Polymerisate und Styrol-Polymerisate.

Als Polymerisate werden die nachstehend aufgeführten besonders bevorzugt, wobei sich die Angaben in Gewichtsprozent, gegebenenfalls mit dem Hilfsmonomeranteil, auf 100 Gew.-% aufaddieren:
Aus der Gruppe der Vinylester-Polymerisate Vinylacetat-Polymerisate, Vinylacetat-Ethylen-Copolymere mit einem Ethylengehalt von 1 bis 60 Gew.-%; Vinylacetat-Ethylen-Vinylchlorid-Copolymere mit einem Ethylengehalt von 1 bis 40 Gew.-% und einem Vinylchlorid-Gehalt von 20 bis 90 Gew.-%; Vinylacetat-Copolymere mit 1 bis 50 Gew.-% eines oder mehrerer copolymerisierbarer Vinylester wie Vinyllaurat, Vinylpivalat, Vinylester einer alpha-verzweigten Carbonsäure, insbesonders Versaticsäure-Vinylester (VeoVa9^{R}, VeoVa10^{R}, VeoVa11^{R}), welche gegebenenfalls noch 1 bis 40 Gew.-% Ethylen enthalten; Vinylacetat-Acrylsäureester-Copolymerisate mit 1 bis 60 Gew.-% Acrylsäureester, insbesonders n-Butylacrylat oder 2-Ethylhexylacrylat, welche gegebenenfalls noch 1 bis 40 Gew.-% Ethylen enthalten.

Aus der Gruppe der (Meth)acrylsäureesterpolymerisate Polymerisate von n-Butylacrylat oder 2-Ethylhexylacrylat; Copolymerisate von Methylmethacrylat mit n-Butylacrylat und/oder 2-Ethylhexylacrylat.
Aus der Gruppe der Vinylchlorid-Polymerisate, neben den obengenannten Vinylester/Vinylchlorid/Ethylen-Copolymerisaten, Vinylchlorid-Ethylen-Copolymere und Vinylchlorid/Acrylat-Copolymere. Aus der Gruppe der Styrol-Polymerisate Styrol-Butadien-Copolymere und Styrol-Acrylsäureester-Copolymere wie Styrol-n-Butylacrylat oder Styrol-2-Ethylhexylacrylat mit einem Styrol-Gehalt von jeweils 10 bis 70 Gew.-%.

Die Herstellung der Polymerisate erfolgt in bekannter Weise nach dem Emulsionspolymerisationsverfahren und anschließender Trocknung, beispielsweise Sprühtrocknung, der damit erhältlichen wäßrigen Polymerdispersionen. Der Anteil an Hydroxygruppen enthaltendem Schutzkolloid kann dabei vor oder während der Polymerisation zugegeben werden, oder auch nach der Polymerisation, das heißt vor, während oder nach dem Trocknungsschritt. Besonders bevorzugt wird die in der EP-B 687317 beschriebene Verfahrensweise zur Herstellung von in Wasser redispergierbaren, Schutzkolloid-stabilisierten Additionspolymerisaten, deren diesbezügliche Offenbarung Teil der vorliegenden Anmeldung sein soll. Mit der zuletzt genannten Verfahrensweise werden die besonders bevorzugten, in Wasser redispergierbaren Additionspolymerisate erhalten, wobei redispergierbar bedeutet, daß die nach der Trocknung erhaltenen Agglomerate bei Zugabe in Wasser wieder in die Primärteilchen zerfallen, welche dann im Wasser dispergiert werden.

Die zur Stabilisierung der Additionspolymerisate im allgemeinen eingesetzten, Hydroxygruppen enthaltende, Schutzkolloide sind Polyhydroxyverbindungen wie voll- oder teilhydrolisierte Polyvinylalkohole, wasserlösliche Polysaccharide wie Stärken (Amylose), Hydroxyalkyletherstärken, Dextrine, Cyclodextrine, Dextran, Xylan und Cellulosen sowie deren Derivate wie Carboxymethyl-, Methyl-, Hydroxyethyl-, Hydroxypropyl-Cellulosen. Unter wasserlöslich ist dabei zu verstehen, daß die Löslichkeit in Wasser bei Normalbedingungen mehr als 10 g pro Liter beträgt. Bevorzugt werden ein oder mehrere teilhydrolisierte Polyvinylalkohole mit einem Hydrolysegrad von 75 bis 99 Mol-%, und einer Höpplerviskosität (4 %-ige wässrige Lösung, DIN 53015, Methode nach Höppler bei 20°C) von 1 bis 60 mPas, insbesondere 4 bis 35 mPas eingesetzt. Der Schutzkolloidanteil beträgt 1 bis 30 Gew.-%, bezogen auf den zu stabilisierenden Polymerisatanteil. Besonders bevorzugt werden 8 bis 30 Gew.-%.

Feste Phenolharze, welche mit dem pulverförmigen Additionspolymerisat (Polymerpulver) modifiziert werden können, werden auch als Novolake bezeichnet und sind durch Umsetzung von Aldehyd mit Phenol in einem Phenol/Aldehyd-Verhältnis größer 1, bei meist saurer Reaktionsführung, zugänglich. Beispiele für Phenole sind neben Phenol selbst, dessen alkylsubstituierten Derivate wie die Kresole und Xylole, halogensubstituierte Phenole wie Chlorphenol, mehrwertige Phenole wie Resorcin oder Brenzcatechin, sowie mehrkernige Phenole wie Naphthol und Bisphenol A. Als Aldehyde kommen beispielsweise Formaldehyd, Paraformaldehyd, Acetaldehyd und Butyraldehyd zum Einsatz. Bevorzugt sind Phenol-Formaldehyd-Harze.

Novolake stellen Gemische aus verschieden weit kondensierten Harzkomplexen dar, die aus methylenverknüpften Polyphenolen aufgebaut sind. Wegen des Fehlens reaktiver Gruppen sind Novolake nicht eigenhärtend, sondern benötigen ein Härtungsmittel. Beispiele für Härtungsmittel sind Paraformaldehyd oder Hexamethylentetramin. Im allgemeinen enthalten Novolak-Zusammensetzungen 1 bis 15 Gew.-% Härtungsmittel, bezogen auf den Novolakanteil. Bei der Härtung durch Temperaturbehandlung tritt eine Vernetzung der kettenförmigen Novolakmoleküle ein. Zur Beschleunigung dieser Vernetzung werden bei der erfindungsgemäßen Vorgehensweise 0.1 bis 40 Gew.-%, vorzugsweise 3 bis 40 Gew.-%, besonders bevorzugt 10 bis 30 Gew.-%, jeweils bezogen auf den Anteil an Phenolharz und Polymerpulver, Polymerpulver eingesetzt.

Die mit Polymerpulver modifizierten Phenolharze eignen sich insbesondere zur Verklebung bzw. Verfestigung von Substraten aus der Gruppe der natürlichen und synthetischen Fasermaterialien. Als Fasern kommen alle Rohstoffe in Betracht, die in der einschlägigen Nonwoven-Industrie zum Einsatz kommen: Polyester-, Polyamid-, Polypropylen-, Polyethylen-, Glas-, Keramik-, Aramid-, Viskose-, Carbon-, Cellulose-, Baumwolle-, Wolle- oder Holzfasern, sowie Mischungen der genannten Fasern. Eine Beschränkung oder eine Bevorzugung bei der Auswahl der Fasermaterialien besteht nicht. Die Fasermaterialien können als Fasern, Garne, Gewirre, Gelege oder in Form von gewebten Textilien (Gewebe) eingesetzt werden. Bevorzugt werden Gewirre oder Gelege aus Polyester-, Polyamid-, Polypropylen-, Polyethylen-, Aramid-, Carbon-, Glas-, Cellulose-, Baumwolle-, Wolle- oder Holzfasern.
Im allgemeinen werden zur Faserbindung 1 bis 50 Gew.-% an Bindepulver (Phenolharz + Polymerpulver), bevorzugt jedoch 5 bis 35 Gew.-% und ganz besonders bevorzugt 15 bis 30 Gew.-%, jeweils bezogen auf das Gesamtgewicht des textilen Flächengebildes, verwendet.

Bei der Verfestigung der Fasermaterialien mit der mit Additionspolymerisat modifizierten Phenolharz-Zusammensetzung kann mit den in der Nonwoven-Technologie üblichen Verfahrensweisen vorgegangen werden:
Die Fasern werden mit der mit Polymerpulver modifizierten Phenolharz-Zusammensetzung in einem Luftstrom gemischt und die Faser/Pulvermischung nach den üblichen Verfahren der Nonwoven-technologie, gegebenenfalls Kardieren der Faser/Pulvermischung, zu einem Faserbett abgelegt. Die Aushärtung des Pulvers erfolgt bei einer sofort anschließenden Ofenfahrt, wobei optional noch Heißdampf eingesetzt werden kann. Die Ofentemperatur richtet sich nach der Verweilzeit des Vlieses im Ofen und der entsprechende eingestellten Härtungskinetik. Die Einwirkung von Scherkräften begünstigt die Aushärtung.

Üblicherweise werden die Vliese bei 110°C bis 180°C, vorzugsweise 120°C bis 170°C, insbesondere 130°C bis 160°C für einen Zeitraum von 30 Sekunden bis 5 Minuten, vorzugsweise 1 bis 4 Minuten, insbesondere 1.5 bis 3 Minuten erhitzt. Die so gebundenen Vliese können gegebenenfalls anschließend unter einem Druck von 1 bis 100 bar in einer Heißpresse zu Formteilen gepreßt werden. Dies geschieht ebenfalls optional unter Zuhilfenahme von Heißdampf. Die Werkzeugtemperaturen liegen dabei zwischen 150°C und 250°C bei Verweilzeiten von 0.25 bis 10 Minuten in der Presse.

Es kann auch so vorgegangen werden, daß das Polymerpulver und das Phenolharz-Pulver als Mischung oder nacheinander in beliebiger Reihenfolge in ein zuvor abgelegtes Faserbett eingestreut werden und durch Rütteln oder Nadeln in das Faserbett eingearbeitet werden. Gegebenenfalls kann daran anschließend eine zweite Vliesbildung erfolgen, wobei eine innige Mischung von Fasern und Pulver als weiteres Vlies abgelegt wird. Die Aushärtung des Pulvers erfolgt durch Temperaturerhöhung, gegebenenfalls unter Anwendung von Druck und Heißdampf zu den obengenannten Bedingungen.

Weiter kann so vorgegangen werden, daß zwei oder mehr Nonwovens bzw. Gewebe miteinander kaschiert werden. Dazu werden fertige Faservliese bzw. andere Substrate mit dem Phenolharz-Pulver und dem Polymerpulver beaufschlagt, anschließend großflächig zusammengeführt und unter den obengenannten Bedingungen, gegebenenfalls unter zusätzlicher Anwendung von Druck und Heißdampf, bei erhöhter Temperatur vernetzt.

Die Kombination von Polymerpulver und Phenolharzpulver eignet sich zur Herstellung von Formteilen aus Fasermaterialien sowie zur Herstellung von Vorstufen solcher Formteile, den sogenannten Halbzeugen (Waddings). Ferner kann diese bei der Wattenbindung, beispielsweise von Polster-, Isolier- und Filterwatten, verwendet werden. Weiterhin bevorzugt werden Laminate oder Kaschiererzeugnisse, bei denen zwei gleiche oder zwei unterschiedliche flächenhaft ausgebreiteten Fasergebilde miteinander verklebt werden. Beispiele hierfür sind Dämmstoffe im Automobilbau aus Reißbaumwolle, die mit einem Deckvlies dauerhaft kaschiert werden. Bevorzugt werden auch Laminate bei denen Fasergebilde gegen andere Substrate verklebt werden. Beispiele hierfür sind die Verklebungen von Glasfasern auf dekorativen Deckfolien oder Deckenplatten im Bereich der Bauisolierungen oder Verklebungen von Geweben oder anderen Vliesen gegenüber Leder in der Schuhindustrie (Schuhkappen). Weiter werden Laminate von mehreren aufeinanderliegenden Gewebeschichten bevorzugt, die mittels der erfindungsgemäßen Vorgehensweise gebunden werden. Beispiele hierfür sind zwei- oder mehrschichtige Gewebelagen aus Glas-, Carbon- und/oder Aramidfaser, die gegebenenfalls zu Formkörpern verarbeitet werden können.

Neben der Beschleunigung der Aushärtung erhält man bei der erfindungsgemäßen Vorgehensweise aufgrund des Anteils an pulverförmigem Additionspolymerisat Formkörper mit geringerer Sprödigkeit.

Die nachfolgenden Beispiele dienen zur weiteren Erläuterung der Erfindung.

### Beispiele 1 bis 6:

Die nachfolgenden Beispiele zeigen die Beschleunigung der Härtungskinetik von Phenolharzen in Gegenwart der Polymerpulver. Dazu wurden unterschiedliche Polymerpulver in Kombination mit Phenolharzen bezüglich ihres Härtungsverhaltens untersucht.

Als Polymerpulver wurden eingesetzt:
Polymerpulver I: Polyvinylalkohol-stabilisiertes Polyvinylacetatpulver
Polymerpulver II: Polyvinylalkohol-stabilisiertes Vinylacetat-Ethylen-Copolymerpulver
Polymerpulver III: Polyvinylalkohol-stabilisiertes Vinylacetat-N-Methylolacrylamid-Copolymerpulver
Polymerpulver IV: Polyvinylalkoholpulver Vergleichspolymerpulver V: Polyvinylacetat-Pulver

Als Phenolharze wurden eingesetzt:
Phenolharz A: Ein Hexa-Novolak auf Basis Phenol und Formaldehyd (Molekulargewicht 540 g/mol, Korngröße 50 µm)
Phenolharz B: Ein Hexa-Novolak auf Basis Phenol und Formaldehyd (Molekulargewicht 510 g/mol, Korngröße 40 µm)

### Versuchsdurchführung:

Die Polymerpulver und die Phenolharze wurden in den in Tabelle 1 angegebenen Mischungsverhältnissen homogen gemischt. Das Gemisch wurde mit einem Metallspatel auf die Heizbank gelegt und solange gerührt bis die Schmelze geliert war bzw. sich nicht mehr verstreichen ließ. Diese Zeit wurde mit einer Stoppuhr vom Aufstreuen bis zum Gelieren gemessen und als Gelzeit in Sekunden notiert. Die Messungen auf der Heizbank wurden bei drei verschiedenen Temperaturen (150°C, 170°C, 190°C) durchgeführt. Die Ergebnisse sind in Tabelle 1 zusammengefaßt.

Die Ergebnisse aus Tabelle 1 zeigen folgendes:
Polyvinylalkohol-stabilisierte Polymerpulver (Beispiele 1 bis 4) und Polyvinylalkohol-Pulver (Beispiel 6) beschleunigen deutlich die Härtung von Hexa-Novolaken. Reines Polyvinylacetat-Pulver zeigt keinen Effekt (Vergleichsbeispiel 5).

**Tabelle 1**

| Beispiel | Phenolharz | Polymerpulver | Verhältnis (g/g) | Gelzeit in Sekunden | | |
|---|---|---|---|---|---|---|
| | | | | 150°C | 170°C | 190°C |
| 1a | A | - | 100 / - | 170 | 80 | 40 |
| 1b | A | I | 95 / 5 | 115 | 44 | 25 |
| 1c | A | I | 80 / 20 | 120 | 55 | 30 |
| 1d | A | I | 60 / 40 | 60 | 55 | 30 |
| | | | | | | |
| 2a | A | - | 100 / - | 170 | 80 | 40 |
| 2b | A | II | 95 / 5 | 120 | 55 | 35 |
| 2c | A | II | 90 / 10 | 120 | 50 | 30 |
| 2d | A | II | 60 / 40 | 40 | 35 | 25 |
| | | | | | | |
| 3a | A | - | 100 / - | 170 | 80 | 40 |
| 3b | A | III | 95 / 5 | 120 | 50 | 35 |
| 3c | A | III | 85 / 15 | 90 | 50 | 30 |
| | | | | | | |
| 4a | B | - | 100 / - | 115 | 55 | 40 |
| 4b | B | III | 95 / 5 | 105 | 45 | 35 |
| 4c | B | III | 75 / 25 | 85 | 45 | 30 |
| | | | | | | |
| V5a | A | - | 100 / - | 170 | 80 | 40 |
| V5b | A | V | 75 / 25 | 195 | 80 | 45 |
| V5c | A | V | 65 / 35 | 190 | 95 | 55 |
| V5d | A | V | 60 / 40 | 200 | 115 | 70 |
| | | | | | | |
| 6a | A | - | 100 / - | 170 | 80 | 40 |
| 6b | A | IV | 95 / 5 | 95 | 50 | 40 |
| 6c | A | IV | 60 / 40 | 70 | 50 | 30 |

### Beispiele 7 bis 11:

Die nachfolgenden Beispiele zeigen die Herstellung von Formteilen und Preßplatten aus Baumwollfasern und den mit Härtungsbeschleuniger modifizierten Phenolharzpulvern. Dazu wurden 107 g Fasern mit jeweils 26 g der entsprechenden Bindepulverzubereitung vermengt, auf einer Fläche von 24x24 cm ausgebreitet und zu Planplatten verpreßt. Werkzeugtemperatur 180°C, Preßzeiten 0.5, 1, 2 und 4 min, Flächengewicht 2187 g/m², Dicke 2 mm.
Die nachfolgende Tabelle 2 zeigt die Durchbiegung eines 10 cm langen und 2 cm breiten Probekörpers, der aus den Planplatten herausgeschnitten wurde, bei einer Belastung von 40 g und einer Temperatur von 120°C.

Vergleichsbeispiel 7 zeigt den Wärmestand von Formkörpern, welche mit reinem Phenolharz ohne Zusatz von Härtungsbeschleuniger verfestigt sind. Die Beispiele 8 bis 11 beschreiben das Verhalten der mit Härtungsbeschleuniger modifizierten Phenolharzpulver. Man erkennt jeweils eine signifikante Verbesserung des Wärmestandes (= geringere Durchbiegung) in Abhängigkeit der gewählten Preßzeit.

**Tabelle 2**

| Beispiel | Phenolharz A | Polymerpulver III | Durchbiegung in [mm] | | | |
|---|---|---|---|---|---|---|
| | | | 0.5 min | 1 min | 2 min | 4 min |
| V.bsp.7 | 100 | - | 79.0 | 34.0 | 12.5 | 14.0 |
| Bsp. 8 | 90 | 10 | 59.5 | 11.5 | 11.5 | 16.0 |
| Bsp. 9 | 80 | 20 | 85.0 | 24.5 | 13.5 | 9.0 |
| Bsp. 10 | 70 | 30 | 85.0 | 24.5 | 12.5 | 19.0 |
| Bsp. 11 | 60 | 40 | 75.0 | 57.0 | 27.0 | 11.5 |

## Patentansprüche

1. Verfahren zur Herstellung von schnellhärtenden, mit Phenolharz gebundenen Formkörpern, dadurch gekennzeichnet, daß pulverförmige Phenolharze zusammen mit pulverförmigen Additionspolymerisaten aus der Gruppe umfassend Polyvinylalkohole und mit Hydroxygruppen enthaltenden Schutzkolloiden stabilisierte Additionspolymerisate von einem oder mehreren Monomeren aus der Gruppe der Vinylester von unverzweigten oder verzweigten Carbonsäuren mit 1 bis 12 C-Atomen, der Ester der Acrylsäure und Methacrylsäure mit unverzweigten oder verzweigten Alkoholen mit 1 bis 12 C-Atomen, Vinylaromaten, Vinylhalogenide, Olefine, Diene, mit dem zu verklebenden Substrat vermischt werden oder auf das zu verklebende Substrat aufgetragen werden und anschließend, unter Anwendung erhöhter Temperatur und gegebenenfalls von erhöhtem Druck, ausgehärtet und zu einem Formteil verarbeitet werden.

2. Verfahren nach Anspruch 1, dadurch gekennzeichnet, daß als Polymerisate Vinylester-Polymerisate, (Meth)acrylsäureester-Polymerisate, Vinylchlorid-Polymerisate und Styrol-Polymerisate verwendet werden.

3. Verfahren nach Anspruch 1 bis 2, dadurch gekennzeichnet, daß als Schutzkolloid ein oder mehrere aus der Gruppe umfassend teilhydrolisierte Polyvinylalkohole, wasserlösliche Polysaccharide wie Stärken (Amylose), Hydroxyalkyletherstärken, Dextrine, Cyclodextrine, Dextran, Xylan und Cellulosen sowie deren Derivate wie Carboxymethyl-, Methyl-, Hydroxyethyl-, Hydroxypropyl-Cellulosen verwendet werden.

4. Verfahren nach Anspruch 1 bis 3, dadurch gekennzeichnet, daß die mit Hydroxygruppen enthaltenden Schutzkolloiden stabilisierten Additionspolymerisate in Form von in Wasser redispergierbaren Pulver verwendet werden.

5. Verfahren nach Anspruch 1 bis 4, dadurch gekennzeichnet, daß als Phenolharz Novolake verwendet werden.

6. Verfahren nach Anspruch 1 bis 5, dadurch gekennzeichnet, daß die Aushärtung und Formgebung bei einer Temperatur von 110°C bis 180°C und unter einem Druck von 1 bis 100 bar erfolgt.

7. Verfahren nach Anspruch 1 bis 6, dadurch gekennzeichnet, daß als Substrat natürliche und synthetische Fasermaterialien aus der Gruppe umfassend Polyester-, Polyamid-, Polypropylen-, Polyethylen-, Glas-, Keramik-, Aramid-, Viskose-, Carbon-, Cellulose-, Baumwolle-, Wolle- oder Holzfasern, sowie Mischungen der genannten Fasern, eingesetzt werden.

8. Verfahren nach Anspruch 1 bis 7, dadurch gekennzeichnet, daß die Fasern, die pulverförmige Phenolharze und die pulverförmigen Additionspolymerisaten in einem Luftstrom gemischt, ausgehärtet und zu einem Formteil verarbeitet werden.

9. Verfahren nach Anspruch 1 bis 7, dadurch gekennzeichnet, daß das pulverförmige Additionspolymerisat und das pulverförmige Phenolharz als Mischung oder nacheinander in beliebiger Reihenfolge in ein zuvor abgelegtes Faserbett eingestreut werden, durch Rütteln oder Nadeln in das Faserbett eingearbeitet werden, ausgehärtet und zu einem Formteil verarbeitet werden.

10. Verfahren nach Anspruch 1 bis 7, dadurch gekennzeichnet, daß zwei oder mehr fertige Faservliese und/oder Gewebe mit dem pulverförmigen Additionspolymerisat und dem pulverförmigen Phenolharz beaufschlagt werden, anschließend großflächig zusammengeführt und miteinander kaschiert werden.

## Claims

1. A process for producing fast curing mouldings bonded with phenolic resin, characterized in that pulverulent phenolic resins are mixed with or applied to the substrate to be adhered together with pulverulent addition polymers selected from the group consisting of polyvinyl alcohols and addition polymers, stabilized by hydroxyl-containing protective colloids, of one or more monomers from the group of the vinyl esters of branched or unbranched carboxylic acids of 1 to 12 carbon atoms, the esters of acrylic acid and methacrylic acid with branched or unbranched alcohols of 1 to 12 carbon atoms, vinylaromatics, vinyl halides, olefins and dienes, and subsequently, by the employment of elevated temperature and optionally elevated pressure, cured and processed into a shaped article.

2. A process according to Claim 1, characterized in that the polymers used are vinyl ester polymers, (meth)acrylic ester polymers, vinyl chloride polymers and styrene polymers.

3. A process according to Claim 1 or 2, characterized in that the protective colloid used is one or more from the group consisting of partially hydrolysed polyvinyl alcohols, water-soluble polysaccharides such as starches (amylose), hydroxyalkyl ether starches, dextrins, cyclodextrins, dextran, xylan and celluloses and also derivatives thereof such as carboxymethyl-, methyl-, hydroxyethyl- and hydroxypropyl-celluloses.

4. A process according to any of Claims 1 to 3, characterized in that the addition polymers stabilized with hydroxyl-containing protective colloids are used in the form of water-redispersible powders.

5. A process according to any of Claims 1 to 4, characterized in that the phenolic resin used is a novolak.

6. A process according to any of Claims 1 to 5, characterized in that the curing and shaping is effected at a temperature of 110°C to 180°C and under a pressure of 1 to 100 bar.

7. A process according to any of Claims 1 to 6, characterized in that the substrate used is a natural or synthetic fibre material selected from the group consisting of polyester, polyamide, polypropylene, polyethylene, glass, ceramic, aramid, viscose, carbon, cellulose, cotton, wool or wood fibres and also blends thereof.

8. A process according to any of Claims 1 to 7, characterized in that the fibres, the pulverulent phenolic resins and the pulverulent addition polymers are blended in an air stream, cured and processed into a shaped article.

9. A process according to any of Claims 1 to 7, characterized in that the pulverulent addition polymer and the pulverulent phenolic resin are sprinkled as a blend or in succession in any desired order into a previously laid-down fibre bed, incorporated into the fibre bed by shaking or needling, cured and processed into a shaped article.

10. A process according to any of Claims 1 to 7, characterized in that two or more ready-made fibre webs and/or wovens are treated with the pulverulent addition polymer and the pulverulent phenolic resin, subsequently combined at their large surfaces and laminated to each other or one another.

## Revendications

1. Procédé de production de pièces moulées à durcissement rapide, liées par une résine phénolique, caractérisé en ce que des résines phénoliques pulvérulentes sont mélangées avec le substrat destiné à être collé ou appliquées sur le substrat destiné à être collé, conjointement avec des polymères d'addition pulvérulents parmi le groupe constitué d'alcools polyvinyliques et de polymères d'addition, stabilisés par des colloïdes protecteurs renfermant des groupes hydroxy, d'un ou de plusieurs monomères parmi le groupe constitué des esters vinyliques d'acides carboxyliques non ramifiés ou ramifiés ayant de 1 à 12 atomes de carbone, des esters de l'acide acrylique et de l'acide méthacrylique avec des alcools ramifiés ou non ramifiés ayant de 1 à 12 atomes de carbone, de composés vinyl aromatiques, d'halogénures de vinyle, d'oléfines et de diènes, et ensuite, en employant une température accrue et éventuellement une pression accrue, on les durcit et on les met sous forme de pièce moulée.

2. Procédé selon la revendication 1, caractérisé en ce que l'on utilise, en tant que polymères, des polymères d'ester vinylique, des polymères d'ester (méth)acrylique, des polymères de chlorure de vinyle et des polymères de styrène.

3. Procédé selon la revendication 1 ou 2, caractérisé en ce que l'on utilise, en tant que colloïde protecteur, un ou plusieurs parmi le groupe constitué d'alcools polyvinyliques partiellement hydrolysés, de polysaccharides hydrosolubles tels que des amidons (amylose), des amidons d'éthers hydroxyalkyliques, des dextrines, des cyclodextrines, le dextrane, le xylane et des celluloses ainsi que leurs dérivés, tels que la carboxyméthylcellulose, la méthylcellulose, l'hydroxyéthylcellulose et l'hydroxypropylcellulose.

4. Procédé selon les revendications 1 à 3, caractérisé en ce que les polymères d'addition stabilisés par des colloïdes protecteurs renfermant des groupes hydroxy sont utilisés sous forme de poudres redispersables dans l'eau.

5. Procédé selon les revendications 1 à 4, caractérisé en ce que l'on utilise des novolaques en tant que résine phénolique.

6. Procédé selon les revendications 1 à 5, caractérisé en ce que le durcissement et la mise en forme sont réalisés à une température de 110° C à 180° C et sous une pression de 1 à 100 bars.

7. Procédé selon les revendications 1 à 6, caractérisé en ce que l'on utilise, en tant que substrat, des matières fibreuses naturelles et synthétiques parmi le groupe constitué de fibres de polyester, de polyamide, de polypropylène, de polyéthylène, de verre, de céramique, d'aramide, de viscose, de carbone, de cellulose, de coton, de laine ou de bois, ainsi que des mélanges desdites fibres.

8. Procédé selon les revendications 1 à 7, caractérisé en ce que les fibres, les résines phénoliques pulvérulentes et les polymères d'addition pulvérulents sont mélangés dans un courant d'air, durcis et mis sous forme d'une pièce moulée.

9. Procédé selon les revendications 1 à 7, caractérisé en ce que le polymère d'addition pulvérulent et la résine phénolique pulvérulente sont répandus sous forme d'un mélange ou successivement dans un ordre quelconque dans un lit de fibres préalablement déposé, incorporés dans le lit de fibres par secouage ou aiguilletage, durcis et mis sous forme d'une pièce moulée.

10. Procédé selon les revendications 1 à 7, caractérisé en ce que deux nappes de fibres finies et/ou étoffes tissées ou plus sont traitées par le polymère d'addition pulvérulent et la résine phénolique pulvérulente, puis combinées sur une grande surface et stratifiées l'une sur l'autre.
